# EUROPEAN PATENT SPECIFICATION

(11) **EP 3 530 679 B1**
(45) Date of publication and mention of the grant of the patent: **16.08.2023**
(21) Application number: 17861858.3
(22) Date of filing: 17.10.2017
(51) Int. Cl.: C08F 16/06, B41M 5/52, C08F 8/30, C08F 20/58, C08J 3/24, C08K 5/25, C08L 29/04, C08K 3/011

(54) **METHOD FOR ACCELERATING CROSSLINKING REACTION OF POLYVINYL ALCOHOL RESIN**
VERFAHREN ZUR BESCHLEUNIGUNG DER VERNETZUNGSREAKTION VON POLYVINYLALKOHOLHARZ
PROCÉDÉ D'ACCÉLÉRATION DE LA RÉACTION DE RÉTICULATION DE RÉSINE DE POLY(ALCOOL VINYLIQUE)

(30) Priority: 19.10.2016 JP 2016205527
(43) Date of publication of application: 28.08.2019
(73) Proprietor: Japan Vam & Poval Co., Ltd., Nishi-ku Sakai-shi Osaka 592-8331 (JP)
(72) Inventor: KAWANISHI Masatoshi, Sakai-shi, Osaka 592-8331 (JP)
(74) Representative: Lederer & Keller Patentanwälte Partnerschaft mbB
(86) International application number: PCT/JP2017/037465
(87) International publication number: WO 2018/074448

(56) References cited:
- WO-A1-2012/070339
- JP-A- H10 287 711
- JP-A- 2000 265 023
- JP-A- 2000 273 261
- JP-A- 2003 201 455
- JP-A- 2003 201 455
- JP-A- 2006 272 797
- JP-A- 2007 118 531
- JP-A- 2010 069 774
- JP-A- 2016 112 870
- US-A- 3 518 242

## Description

### TECHNICAL FIELD

The present invention relates to a crosslinking reaction of a polyvinyl alcohol (hereinafter abbreviated as PVA) resin, and also relates to a method for accelerating (increasing the rate of) a reaction of a PVA resin containing a diacetone acrylamide unit with a crosslinking agent having a hydrazino group.

### BACKGROUND ART

PVA is one of representative water-soluble synthetic resins, and is used in a wide variety of applications, such as adhesives, paper coating agents, films, and film coating agents, due to its excellent adhesiveness, film-forming property, barrier property, and dispersibility. In addition, an aqueous gel obtained by crosslinking a PVA resin with use of a crosslinking agent has been actively examined for potential use as a medical material or a toy. Also, active attempts to apply an aqueous PVA resin to applications that have been so far regarded as inappropriate have been made, for example, by providing strength and water resistance to an adhesive or a coating agent based on a combination of a PVA resin and a crosslinking agent.

For crosslinking PVA, various methods, including a method in which a boron compound, such as borax, is added to PVA for reaction and a method in which dialdehyde is added to an aqueous solution of PVA under acidic conditions for acetalization have been proposed. However, many crosslinking agents, such as boron compounds and aldehyde compounds, bring concern about environmental impact and safety, and therefore, have been used only in limited applications.

A means for solving these problems is a method for crosslinking a PVA resin in which a diacetone acrylamide-modified PVA resin and a multifunctional hydrazide compound are reacted. For example, Patent Literature 1 describes that a highly water-resistant film that does not dissolve even when immersed in hot water is formed by casting a mixed aqueous solution containing a diacetone acrylamide-PVA copolymer and, for example, adipic acid dihydrazide on polyethylene terephthalate followed by drying at room temperature. Also, Patent Literature 2 illustrates that an aqueous gel excellent in strength and durability can be obtained by casting a mixed solution containing a diacetone acrylamide -modified PVA and N-aminopolyacrylamide into a metal mold and leaving it to stand at 10°C for 2 hours.

That is, the reaction of a diacetone acrylamide-modified PVA and a multifunctional hydrazide compound proceeds in an aqueous solution, and therefore, during storage, the mixed aqueous solution thereof becomes more viscous while losing the nature of solution and turns into a gel. Also, this reaction system is characterized in that, after the mixed aqueous solution is cast on a film or applied to a base material, as drying proceeds and water evaporates, the concentrations of the resin and the crosslinking agent become higher, and the reaction rate increases, resulting in the formation of a water-resistant film. This crosslinking reaction has various uses because no harmful crosslinking agents are used, the reaction occurs in a wide pH range, and a highly water-resistant film and an aqueous gel excellent in strength and durability can be obtained without heating treatment.

Problems regarding the use of the reaction system of a diacetone acrylamide-modified PVA resin and a multifunctional hydrazide compound in applications, such as paper coating, adhesion, and films, include a problem of potlife of the mixed aqueous solution. That is, when a mixed aqueous solution obtained by adding a crosslinking agent, such as a polyfunctional hydrazide compound, to an aqueous solution of a diacetone acrylamide-modified PVA and subsequent mixing is immediately used in coating, adhesion, or casting, no problems occur, but when the mixed aqueous solution is stored as it is or a long time elapses before all of the prepared mixed solution is used up, crosslinking reaction proceeds even in water, the solution eventually gels, losing flowability, and becomes useless. Other expected problems are that changes in the viscosity during use may lead to quality variation of the resulting film or the like, and that gelation may occur in the tank or piping used for production.

As a method for solving the potlife problem, Patent Literature 3, for example, discloses a method in which a water-soluble amine compound or ammonia is added. Also, Patent Literature 4 discloses a potlife-improving method characterized by adding an aminocarboxylic acid. Such methods for reducing the reaction rate in a solution have been examined.

However, in the cases where a diacetone acrylamide-modified PVA and a multifunctional hydrazide compound are reacted to give an aqueous gel, the method disclosed in Patent Literature 2 in which a mixed aqueous solution obtained by adding a multifunctional hydrazide compound to an aqueous solution of the PVA resin is cast into a mold for gelation, has a problem of low productivity because slow crosslinking prolongs the time for the solution to become hard enough to be taken out of the mold. Also, Patent Literature 2 illustrates that allowing a solution obtained by adding a water-soluble macromolecular polysaccharide, such as sodium alginate, that is capable of serving as a gelling agent when brought in contact with at least one polyvalent metal ion to an aqueous solution of the PVA to drip into an aqueous solution of polyvalent metal ions and a multifunctional hydrazide compound gives spherical gels as a result of surface tension of the fallen drops. However, this method gives only spherical gels, and the resulting gels contain water-soluble macromolecular polysaccharides, which are unfavorable in some applications and may have to be removed from the crosslinked gel of the PVA resin and the hydrazide compound by washing. Therefore, a crosslinking system that gives a non-spherical gel not containing macromolecular polysaccharides is desired.

In addition, Patent Literature 5 discloses a method for producing an inkjet recording material utilizing a system in which a diacetone acrylamide-modified PVA and a crosslinking agent, such as a hydrazide compound, are allowed to react. An inkjet recording material is a recording material having an ink receiving layer where a porous inorganic material, such as silica, is bound on a base material with use of a hydrophilic resin binder. As the binder, a crosslinking system using a PVA having a relatively high polymerization degree and boric acid as a crosslinking agent has conventionally been used (Patent Literature 6) . Since the rate of reaction of the PVA resin and boric acid is high, when both are previously mixed, the viscosity of the coating liquid rapidly increases. To avoid the thickening, an aqueous PVA solution and an aqueous boric acid solution are separately prepared, and they are mixed with use of a static mixer, for example, immediately before coating of a base material. In this method, crosslinking reaction is allowed to proceed in a flow path in the coater from mixing to coating, and after coating before getting dried.

Recently, however, reproductive toxicity of boron compounds, such as boric acid, is pointed out, and the Registration, Evaluation, Authorization and Restriction of Chemicals (REACH) includes the compounds in the candidate list of Substance of Very High Concern (SVHC). In this situation, the method of Patent Literature 5 has become hard to use.

To solve these problems, a crosslinking system consisting of a diacetone acrylamide-modified PVA resin/a hydrazide compound is useful. However, the reaction rate of this system is slower as compared to the system of PVA/a boric acid compound, and therefore, crosslinking reaction does not reach completion after coating before getting dried, causing a problem of surface cracking of inkjet recording materials. In recent years, the production rate of inkjet recording materials has been increased, and the time after coating before drying has been reduced. Therefore, further improvement in the reaction rate is required.

As described above, a method for inhibiting the reaction rate of a diacetone acrylamide-modified PVA with a crosslinking agent, such as a hydrazide compound, has been examined so far, but a method for improving the reaction rate has not been examined. To utilize the system as an aqueous gel base material or a binder for inkjet recording materials, a method for improving the reaction rate is required.

Patent Literature 7 discloses a curable aqueous adhesive composed of (A) a first liquid containing an aqueous emulsion containing a saponified product of a diacetoneacrylamide-fatty acid vinyl ester copolymer as an emulsifying and dispersing agent and containing a polymer of an ethylenic unsaturated monomer as a dispersoid and (B) a second liquid composed of an aqueous liquid containing a trifunctional hydrazide compound. The adhesive may comprise aluminum sulfate.

### CITATION LIST

### Patent Literature

Patent Literature 1: JP-08-151412 A
Patent Literature 2: JP 10-287711 A
Patent Literature 3: JP 10-087936 A
Patent Literature 4: JP 11-12424 A
Patent Literature 5: JP 2013-39730 A
Patent Literature 6: JP 07-76161 A
Patent Literature 7: JP 2003-201455 A

### SUMMARY OF INVENTION

### TECHNICAL PROBLEM

An object of the present invention is to provide a method for improving the reaction rate of a diacetone acrylamide-modified PVA resin with a crosslinking agent, such as a hydrazide compound.

More specifically, an object of the present invention is to provide a crosslinking system for a PVA resin characterized in that crosslinking reaction is completed in a short time and therefore the in-mold reaction time for producing an aqueous gel can be shortened and that when used as a binder for inkjet recording materials, the system does not allow surface cracking or the like despite a shorter time from coating to complete drying.

### SOLUTION TO PROBLEM

After intensive investigations, the present inventor found that, in a reaction of a diacetone acrylamide-modified PVA and a hydrazide crosslinking agent, the coexistence of a water-soluble metal significantly increases the crosslinking reaction rate, and completed the present invention.

That is, the method of the present invention is a method for accelerating (increasing or improving) the rate of crosslinking reaction characterized in that, in a crosslinking reaction of (A) a polyvinyl alcohol resin containing a diacetone acrylamide unit and (B) a crosslinking agent having a hydrazino group performed in water, (C) a water-soluble metal not containing any alkaline or alkaline-earth metal coexists; wherein the ratio of the (C) water-soluble metal is 0.05 to 20 parts by mass in terms of the metal atom relative to 100 parts by mass of the (A) polyvinyl alcohol resin and wherein the pH in the reaction system is less than 6.

Also, the present invention is a method for producing an aqueous gel (aqueous gel composition) characterized in that (A) a polyvinyl alcohol resin containing a diacetone acrylamide unit and (B) a crosslinking agent having a hydrazino group are reacted in water in the presence of (C) a water-soluble metal not containing any alkaline or alkaline-earth metal; wherein the ratio of the (C) water-soluble metal is 0.05 to 20 parts by mass in terms of the metal atom relative to 100 parts by mass of the (A) polyvinyl alcohol resin and wherein the pH in the reaction system is less than 6.

In other words, in these methods of the present invention, when the (A) polyvinyl alcohol resin containing a diacetone acrylamide unit and the (B) crosslinking agent having a hydrazino group are reacted (to give a crosslinked product (aqueous gel) of (A) and (B)), the (C) water-soluble metal exists in the system (reaction system).

In the methods of the present invention, the (C) water-soluble metal may be one or more kinds selected from aluminium compounds, titanium compounds, and zirconium compounds, and in particular, may be one or more kinds selected from titanium lactate, zirconium acetate, and zirconium chloride.

In the method of the present invention, the ratio of the (C) water-soluble metal is 0.05 to 20 parts by mass in terms of the metal atom relative to 100 parts by mass of the (A) polyvinyl alcohol resin.

In the method of the present invention, the ratio of the (C) water-soluble metal may be 1 to 100 parts by mass in terms of the metal atom relative to 100 parts by mass of the (B) crosslinking agent having a hydrazino group.

In the method of the present invention, the pH in the reaction system is less than 6 (in particular, 3 to 4.5), and may be adjusted to less than 6 typically by coexistence of (D) a pH adjuster.

In the present invention, as described above, the reactivity between the (A) polyvinyl alcohol resin containing a diacetone acrylamide unit and the (B) crosslinking agent having a hydrazino group can be improved (promoted) by the (C) water-soluble metal.

The aqueous gel composition obtained by the present invention may comprise other components as needed, but usually, the resin component (the resin component of the gel) substantially does not comprise other resin components (for example, water-soluble macromolecular polysaccharide, such as sodium alginate).

When an aqueous gel is used for living bodies, e.g., in medical use, the biocompatibility of ingredients other than the composition of the present invention may be a matter of concern. In this regard, the aqueous gel composition obtained by the present invention not containing such other resin components is advantageous.

The resin component of the gel may comprise other resin components when the (A) polyvinyl alcohol resin is the main component, for example, when the amount of the (A) polyvinyl alcohol resin is 70 mass% or more, preferably 80 mass% or more, further preferably 90 mass% or more, in particular 95 mass% or more.

The aqueous gel composition obtained by the present invention may be a composition to be used as a binder for inkjet recording materials (a binder for inkj et use) . The composition may be a composition (coating liquid) to form the ink receiving layer or a coating liquid (coating liquid to form the ink receiving layer).

The inkjet recording material may be composed of a support (a base material, such as paper or plastic) and an ink receiving layer provided on the support.

The ink receiving layer comprises the composition as a binder, and may further comprise other components (for example, a porous material, such as an inorganic oxide (silica or alumina), an ink absorber or an ink fixing agent.

In the methods of the present invention, the (C) water-soluble metal is a water-soluble metal other than alkaline or alkaline-earth metals, as mentioned above.

### ADVANTAGEOUS EFFECTS OF INVENTION

According to the present invention, without using highly toxic crosslinking agents (such as boric acid), an aqueous gel (in particular, an aqueous gel excellent in transparency and strength) can be obtained in a short time. Furthermore, according to the present invention, an aqueous gel less prone to discolorationcan be obtained.

Also, by applying the aqueous gel composition obtained by the present invention to a binder for an inkjet recording material, an inkjet recording material having an excellent water resistance and surface strength can be obtained. Also a crosslinking system which does not allow surface cracking even when the drying speed is increased can be provided.

### DESCRIPTION OF EMBODIMENTS

In the methods (acceleration method and production method) of the present invention, the reaction of the (A) polyvinyl alcohol resin (PVA resin) containing a diacetone acrylamide unit and the (B) crosslinking agent having a hydrazino group (crosslinking reaction) is performed in the presence (coexistence) of the (C) water-soluble metal.

In these methods, (A) a PVA resin crosslinked by (B) a crosslinking agent is usually obtained, and as the reaction is performed in water, a gel (aqueous gel) is formed.

Hereinafter, the present invention will be described in detail.

### (A) PVA resin

The (A) PVA resin containing a diacetone acrylamide unit (may be referred to as diacetone acrylamide-modified PVA resin) used in the present invention can be obtained by, for example, saponification of a copolymer of diacetone acrylamide and vinyl ester.

Examples of the vinyl ester include aliphatic vinyl esters, such as vinyl acetate, vinyl formate, vinyl propionate, vinyl acetate, vinyl pivalate, and vinyl versatate. Among them, vinyl acetate is industrially preferred. These vinyl esters may be used alone or in a combination of two or more kinds thereof.

The method for polymerization of the diacetone acrylamide-modified PVA resin is not particularly limited and may be any publicly known polymerization method, such as bulk polymerization, solution polymerization, emulsion polymerization or suspension polymerization. Among them, solution polymerization with the use of methanol as the solvent is industrially preferred.

As the method for saponifying the obtained copolymer, publicly known alkali saponification and acid saponification may be employed. In particular, preferred is a method in which alcoholysis is performed with the use of an alkali hydroxide in methanol.

The polymerization degree of the (A) diacetone acrylamide-modified PVA resin is not particularly limited, but the average polymerization degree measured by the method of JIS K-6726 is preferably 500 or higher, more preferably 1000 or higher, and further more preferably 1500 or higher. Since a higher viscosity of the aqueous solution before the reaction is advantageous for a shorter time to gelation, a higher polymerization degree is preferred.

The upper limit of the average polymerization degree is not particularly specified, and may be, for example, 8000 or lower, preferably 5000 or lower.

The 4 mass% aqueous solution viscosity of the (A) diacetone acrylamide-modified PVA resin (20°C) may be about, for example, 5 mPa·s or higher (for example, 5 to 500 mPa.s), preferably 10 mPa·s or higher (for example, 10 to 300 mPa.s), and more preferably 15 mPa·s or higher (for example, 15 to 200 mPa·s). The viscosity of a 4 mass% aqueous solution is measured by a method specified in JIS K-6726.

Also, the saponification degree of the (A) diacetone acrylamide-modified PVA resin used in the present invention is not particularly limited, but the average saponification degree measured by the method of JIS K-6726 is, for example, preferably 70 mol% or higher, more preferably 80 mol% or higher, and still more preferably 90 mol% or higher. When used as a raw material of an aqueous gel or a binder for an inkjet recording material, the PVA resin is preferably water-soluble, and the above ranges are favorable for efficiently ensuring the water solubility.

The upper limit of the average saponification degree is not particularly specified, and may be, for example, 100 mol%, 99.5 mol%, 99 mol% or the like.

The modification degree (the percentage of the diacetone acrylamide to the total monomer content) of the diacetone acrylamide-modified PVA resin used in the present invention is, for example, 0.1 to 15 mol%, preferably 0.5 to 12 mol%, and still more preferably 1 to 8 mol%. The modification degree can be calculated from a chart resulting from ¹H-NMR measurement using DMSO-d₆ as a solvent. When the modification degree is in the above ranges, the crosslinking reaction is allowed to efficiently proceed, and a sufficient water solubility for application to an aqueous gel or an aqueous binder for an inkjet recording material can be efficiently ensured. When the modification degree of the PVA resin is lower than 0.1 mol%, the reaction with the crosslinking agent does not sufficiently proceed. In this case, the PVA resin does not form an aqueous gel, or when used as a binder for an inkjet recording material, the PVA resin does not produce the effect of water resistance or cracking prevention. Also, when the modification degree is higher than 15 mol%, the solubility of the PVA resin in water is decreased, possibly causing problems in use in an aqueous system.

### (B) Crosslinking agent

The (B) crosslinking agent having a hydrazino group (hydrazine crosslinking agent) used in the present invention may usually be a compound having two or more hydrazino groups in the molecule (polyfunctional compound).

Specific examples of the crosslinking agent (multifunctional hydrazine compounds) include carbohydrazide, oxalic acid dihydrazide, malonic acid dihydrazide, succinic acid dihydrazide, glutaric acid dihydrazide, adipic acid dihydrazide, pimelic acid dihydrazide, suberic acid dihydrazide, azelaic acid dihydrazide, sebacic acid dihydrazide, dodecanediohydrazide, hexadecanediohydrazide, terephthalic acid dihydrazide, isophthalic acid dihydrazide, 2,6-naphthoic acid dihydrazide, 4,4'-bis(benzenedihydrazide), 1,4-cyclohexanedihydrazide, tartaric acid dihydrazide, malic acid dihydrazide, iminodiacetic acid dihydrazide, N,N'-hexamethylene bissemicarbazide, itaconic acid dihydrazide, ethylenediaminetetraacetic acid tetrahydrazide, citric acid trihydrazide, butanetricarbohydrazide, 1,2,3-benzene trihydrazide, 1,4,5,8-naphthoic acid tetrahydrazide, nitriloacetic acid trihydrazide, cyclohexanetricarboxylic acid trihydrazide, pyromellitic acid tetrahydrazide, and polyacrylic acid hydrazide (i.e., N-amino polyacrylamide). Among them, in terms of safety, reactivity with the carbonyl group of the diacetone acrylamide-modified PVA resin preferred are fatty acid dihydrazides (for example, alkane dicarboxylic acid dihydrazides, such as adipic acid dihydrazide) and polyacrylic acid hydrazide.

The hydrazine crosslinking agents may be used alone or in a combination of two or more kinds thereof.

The amount (ratio) of the (B) crosslinking agent having a hydrazino group is not particularly limited, but is, for example, preferably 0.1 to 100 parts by mass, more preferably 0.2 to 50 parts by mass, and still more preferably 0.5 to 20 parts by mass relative to 100 parts by mass of the (A) diacetone acrylamide-modified PVA resin. When the amount is in the above ranges, a sufficient crosslinking rate can easily be ensured, and when used in an aqueous gel or as a binder for an inkjet recording material, the PVA resin is easily provided with a sufficient strength. Also, the crosslinking agent is less likely to remain unreacted.

### (C) Water-soluble metal

The (C) water-soluble metal (water-soluble metal component, water-soluble metals) used in the present invention may be any aqueous component comprising a metal other than alkaline metals (such as sodium) or alkaline-earth metals (such as magnesium and calcium), and representative examples thereof include transition metal compounds (for example, compounds of the Group 4 metals of the periodic table, such as a titanium compound or a zirconium compound), main metal compounds (for example, compounds of the Group 13 elements of the periodic table, such as an aluminium compound).

Among them, aluminum compounds, titanium compounds, and zirconium compounds (in particular, titanium compounds and zirconium compounds) are highly effective in accelerating the crosslinking reaction rate, and therefore, are preferable.

Examples of the water-soluble titanium compounds include inorganic salts (for example, titanium halides, such as titanium tetrachloride), salts or complexes with carboxylic acids (for example, salts or complexes with carboxylic acids, such as salts or complexes with lactic acid, such as ammonium titanium lactate and titanium lactate), acetylacetonato complexes (titanium acetylacetonato), salts or complexes with amines (for example, titanium diisopropoxybis(triethanolaminato)di-n-butoxybis(triethanol aminato) titanium, isopropyltris(N-aminoethyl-aminoethyl)titanate), and titanium compounds obtained by stabilizing titanium alkoxides with amines.

Examples of the water-soluble zirconium compounds include salts or complexes with organic acids (for example, salts or complexes with monocarboxylic acids, such as zirconyl acetate (zirconium acetate), zirconyl stearate or zirconyl octylate, and salts or complexes with dicarboxylic acids, such as ammonium zirconium lactate), salts or complexes with inorganic acids (for example, zirconium sulfate, ammonium zirconium carbonate, and zirconium nitrate), halides (for example, zirconyl chloride (zirconium chloride), zirconium oxychloride, and hydroxy zirconium chloride), and acetylacetonato complexes (for example, zirconium acetylacetonato).

Examples of the water-soluble aluminum compounds include salts or complexes with inorganic acids (for example, aluminium sulfate and aluminum carbonate), salts or complexes with organic acids (for example, salts or complexes with monocarboxylic acids, such as aluminium acetate, and salts or complexes with dicarboxylic acids, such as aluminum lactate), halides (for example, aluminium chloride and aluminum bromide), and hydroxides (for example, aluminium hydroxide).

The water-soluble metals may be used alone or in a combination of two or more thereof.

The amount (ratio) of the (C) water-soluble metal is 0.05 to 20 parts by mass, preferably 0.1 part by mass or more (for example, 0.1 to 15 parts by mass), and still more preferably 0.5 part by mass or more (for example, 0.5 to 10 parts by mass) in terms of the metal atom relative to 100 parts by mass of the (A) diacetone acrylamide-modified PVA resin.

Also, the amount (ratio) of the (C) water-soluble metal is, for example, 0.5 part by mass or more (for example, 0.5 to 500 parts by mass), preferably 1 part by mass or more (for example, 1 to 100 parts by mass), and still more preferably 5 parts by mass or more (for example, 5 to 50 parts by mass) in terms of the metal atom relative to 100 parts by mass of the (B) crosslinking agent having a hydrazino group.

In the present invention, the pH in the system (reaction system) or the composition is less than 6 (for example, 2 to 5.5), preferably 2.5 to 5 (for example, 3 to 4.5).

The reaction rate of the (A) polyvinyl alcohol resin containing a diacetone acrylamide unit and the (B) crosslinking agent having a hydrazino group depends on the pH in the system, and is higher at acidic pH. Therefore, the pH is preferably adjusted to an acidic pH, and in terms of safety, versatility, and reaction rate, is preferably adjusted to the above ranges.

The pH may be adjusted with (D) a pH adjuster. Aqueous solutions of the PVA resin and the crosslinking agent having a hydrazino group are each usually pH 5 to 7, i.e., neutral, and therefore, an acidic substance capable of lowering the pH of the mixed solution is added. However, many water-soluble metals are acidic substances, and therefore, an alkaline pH adjuster may be added to prevent excessive lowering of the pH.

Examples of the (D) pH adjuster used here include acidic pH adjusters and alkaline pH adjusters. As the acidic pH adjuster, for example, inorganic acids, such as hydrochloric acid, sulfuric acid, nitric acid, phosphoric acid, and boric acid; and organic acids, such as acetic acid, citric acid, and sulfonic acid may be used. As the alkaline pH adjuster, for example, inorganic bases, such as sodium hydroxide and potassium hydroxide; and organic bases, such as ammonia and ethanolamine may be used.

The pH adjusters may be used alone or in a combination of two or more thereof.

The reaction (crosslinking reaction) is performed in water (or an aqueous solvent).

In the reaction , the concentration of the (A) PVA resin in the system (mixed solution) is not particularly limited, and may be selected according to the desired hardness and the production rate of the aqueous gel. To obtain a harder gel or to increase the production rate, a higher concentration of the aqueous solution is preferred, and to obtain a softer aqueous gel, a lower concentration of the aqueous solution is preferred. Usually, the concentration of the (A) PVA resin in an aqueous solution is preferably 1 to 30 mass%, more preferably 2 to 20 mass%.

Specifically, the methods of the present invention can be performed by preparing an aqueous solution in which (A) a PVA resin containing a diacetone acrylamide unit is dissolved in water by a publicly known method, adding (C) a water-soluble metal, adding, as needed, (D) a pH adjuster to adjust the pH of the mixed solution, and then adding (B) a crosslinking agent having a hydrazino group, followed by mixing, but is not limited to this exemplary method.

Since the crosslinking reaction of the (A) PVA resin containing a diacetone acrylamide unit does not occur without the addition of the (B) crosslinking agent having a hydrazino group, the addition (mixing) of the (C) water-soluble metal and the mixing with the (D) pH adjuster added as needed can be performed without time constraints. Once the (B) crosslinking agent having a hydrazino group is added and mixed, the crosslinking reaction usually proceeds at a rapid rate, and therefore, it is preferable to quickly use the mixed solution for the intended use.

Specific examples of applying the present invention to an aqueous gel (production method of an aqueous gel) include a method comprising adding, to an aqueous solution of (A) a PVA resin containing a diacetone acrylamide unit, (C) a water-soluble metal, adjusting the pH as needed, adding and mixing (B) a crosslinking agent having a hydrazino group, and quickly pouring the mixed solution into a metal mold, a resin mold, a bag or a container; a method comprising filling an aqueous solution of a PVA resin into a mold or a container beforehand, and adding and mixing a crosslinking agent and a water-soluble metal thereto; and a method comprising adding a crosslinking agent alone or a crosslinking agent and a water-soluble metal to a mold or a container beforehand, filling a mixed solution of an aqueous solution of a PVA resin and a water-soluble metal or an aqueous solution of a PVA resin alone into the mold or the container with mixing, and leaving the mixture to stand to allow a crosslinking reaction; each of which gives an aqueous gel.

Without addition of (C) a water-soluble metal, the crosslinking reaction does not rapidly proceed, and a longer time is required to give an aqueous gel. It is impossible to take an ungelled mixture out of a mold or a container, and an attempt to take a gel not having a sufficient hardness, i.e., not completing the crosslinking reaction out of a mold or a container tends to result in collapse of the gel or remaining of a part of the gel in the mold or the container. In this case, the occupation time of the mold or the container becomes longer, which significantly reduces the productivity.

Next, application of the methods of the present invention to a binder for an inkjet recording material will be described.

Inkjet recording system is a method in which droplets of ink sprayed from a nozzle are fixed on a surface of a recording medium for recording of text, images, etc. This system has many advantages, such as easy color printing, low running cost, low noise level, and therefore is widely used in home and office printers. In recent years, along with the increase in use of digital cameras, the recording system has been becoming an established system as an alternative to silver halide photography, and higher and more diverse quality is desired.

An inkjet recording material has an ink receiving layer formed on a support which is a paper sheet, a plastic sheet, a plastics disk. In the ink receiving layer, a hydrophilic resin binder, such as a PVA resin, is used for binding a porous inorganic material, such as silica and alumina, which rapidly absorbs ink, prevents ink from bleeding, and thereby serves for appropriate round dot formation, enabling expression of fine images.

Specific methods for applying the present invention to an inkjet recording material include a method using a coater capable of applying at least two or more kinds of coating liquids and porous inorganic materials while mixing them, the method comprising mixing a mixed aqueous solution comprising (A) a PVA resin containing a diacetone acrylamide unit, (B) a crosslinking agent having a hydrazino group, (C) a water-soluble metal, and as needed (D) a pH adjuster before gelation of the mixed aqueous solution with a porous inorganic material, and applying the mixture to a support, followed by drying.

In the present invention, crosslinking reaction starts when (A) a PVA resin and (B) a crosslinking agent are mixed, and the crosslinking reaction rate is increased in the presence of (C) a water-soluble metal and/or (D) a pH adjuster. Therefore, the time after mixing of (A), (B), and (C), or of (A), (B), (C), and (D) before mixing with a porous inorganic material and the time after mixing of all the components before coating are important. If the time before mixing with a porous inorganic material is too long, the viscosity of the mixed aqueous solution becomes too high or the mixed aqueous solution gels, preventing successful mixing with the porous inorganic material. Also, if the time after mixing of all the components before coating is too long, the mixed aqueous solution gels, preventing successful coating. The mixing of these components is usually performed in a flow path in a coater using a mixer, such as a static mixer, and the timing of addition of each component and the time after mixing before coating can be adjusted by adjusting the length of the flow path and the flow rate.

The coating method is not particularly limited, and a publicly known coating method may be used. The coating may be performed using various apparatuses including, for example, an air knife coater, a curtain coater, a slide lip coater, a die coater, a blade coater, a gate roll coater, a bar coater, a rod coater, a roll coater, a bill blade coater, short dwell blade coater, a size press, etc.

An inkjet binder to which the present invention is applied has a high solution viscosity when mixed with a porous inorganic material. As a result, permeation of the binder solution into the pores of the porous inorganic material is reduced, and therefore, the binder solution is efficiently used for binding the particles of the porous inorganic material, and the crosslinking further proceeds. Consequently, the binder has an increased strength and the ink-receiving layer is less likely to crack. Furthermore, rapid crosslinking allows rapid coating and drying. With the advantages described above, the production rate of the inkjet recording material can be increased.

### EXAMPLES

Hereinafter, the present invention will be illustrated in more detail by Examples, but the present invention is not limited thereto. Various modifications can be made within the technical idea of the present invention by those with ordinary skill in the art. In Examples, "parts" and "%" are on the weight (mass) basis unless otherwise specified.

The synthesis of PVA resins was performed by the method shown below. The saponification degree and the viscosity of a 4% aqueous solution were measured according to JIS K-6726. In addition, the diacetone acrylamide content (the degree of modification) was determined from a chart resulting from ¹H-NMR measurement using DMSO-d₆ as a solvent and a sample of the obtained resin thoroughly washed with methanol.

### Synthetic Example 1

In a flask equipped with a stirrer, a thermometer, and a reflux condenser, 674 parts of vinyl acetate, 5 parts of diacetone acrylamide, and 178 parts of methanol were placed. After nitrogen replacement of the system, the internal temperature was raised to 60°C. To the system, a solution of 1 part of 2,2-azobisisobutyronitrile dissolved in 50 parts of methanol was added to start polymerization. A solution of 50 parts of diacetone acrylamide dissolved in 43 parts of methanol was added dropwise at a constant rate over 5.5 hours from the start of polymerization. At 6 hours from the start, m-dinitrobenzene as a polymerization inhibitor was added to stop the polymerization. The polymerization yield was 78%.

The obtained reaction mixture was subjected to distillation of remaining vinyl acetate with continuous addition of methanol vapor, and thus a 50% methanol solution of a vinyl acetate polymer containing a diacetone acrylamide copolymerization component was obtained. To 500 parts by weight of this mixture, 50 parts by weight of methanol and 10 parts of a 4% methanol solution of sodium hydroxide were added and thoroughly mixed, and saponification was allowed to proceed at 40°C. The obtained gelatinous material was pulverized, thoroughly washed with methanol, and dried to give a saponified vinyl acetate-diacetone acrylamide copolymer. This resin was found to have a diacetone acrylamide unit content (the degree of modification) of 5.0 mol%. Regarding the resin, the viscosity of a 4% aqueous solution at 20°C was 26.8 mPa·s and the saponification degree was 98.4 mol%.

### Synthetic Example 2, Comparative Synthetic Example 1

The PVA resins of Synthetic Example 2 and Comparative Synthetic Example 1 were obtained in the same manner as in Synthetic Example 1 except that the amount of sodium hydroxide for saponification was changed and that the starting composition was changed as shown in Table 1.

**Table 1**

| | Starting composition (part) | | | Polymerization yield (%) | Analytical values of the resin | | |
|---|---|---|---|---|---|---|---|
| | Vinyl acetate | Methanol | Diacetone acrylamide | | Degree of saponification (mol%) | Viscosity of 4% aq. soln. (mPa·s) | Degree of modification (mol%) |
| Syn. Ex. 1 | 674 | 271 | 55 | 78 | 98.4 | 26.8 | 5.0 |
| Syn. Ex. 2 | 602 | 360 | 38 | 83 | 94.5 | 16.2 | 3.6 |
| Comp. Syn. Ex. 1 | 750 | 250 | - | 65 | 98.5 | 27.9 | 0.0 |

| | | | | | | | |
|---|---|---|---|---|---|---|---|
| Syn. Ex.: Synthetic Example Comp. Syn. Ex.: Comparative Synthetic Example | | | | | | | |

### Example 1

In a beaker, 50 parts of a 10% aqueous solution of the (A) PVA resin containing 5.0 mol% of diacetone acrylamide unit of Synthetic Example 1 was placed. To this, was added and mixed, as (C) a water-soluble metal, 1 part of a 10% solution obtained by diluting titanium lactate in 2-propanol/water (ORGATIX TC-310, made by Matsumoto Fine Chemical Co., Ltd.) with water (2 parts of titanium lactate relative to 100 parts of the PVA resin) . The pH of the mixture was 3.4. A stir bar was placed in the beaker, and while the mixture was stirred by a magnetic stirrer, 2.5 parts of a 10% aqueous solution of adipic acid dihydrazide was added as (B) a crosslinking agent (5 parts of adipic acid dihydrazide relative to 100 parts of the PVA resin) . After the addition, as the crosslinking reaction proceeded, the viscosity of the mixture increased, and gelation of the mixture prevented the stirrer from further rotating. The time to the stop of the stirrer measured with a stopwatch was 3 minutes and 40 seconds.

### Example 2

The same procedure was performed as in Example 1 except that a 10% solution obtained by diluting dihydroxybis (ammonium lactate)titanium in 2-propanol/water (ORGATIX TC-335, made by Matsumoto Fine Chemical Co., Ltd.) with water was used instead of the 10% solution of the titanium lactate in 2-propanol/water. The measured time from the addition of the crosslinking agent to the stop of the stirrer due to gelation was 6 minutes and 10 seconds.

### Examples 3 to 12, Comparative Examples 1 to 5

The same procedure was performed as in Example 1 except that the type of the PVA resin (A), the type and the added amount of the water-soluble metal (C), the type of the pH adjuster (D) and the adjusted pH, and the type and the added amount of the crosslinking agent (B) were changed as shown in Table 2. The time from the addition of the crosslinking agent to the stop of the stirrer due to gelation was measured in the same manner.

The conditions and the results are shown in Table 2.

**Table 2**

| | (A) PVA resin | (C) Water-soluble metal | | (D) pH Adjuster | | (B) Crosslinking agent | | Reaction time (m:s) |
|---|---|---|---|---|---|---|---|---|
| | Type | Type | Added amount (wt%/PVA) | Type | Adjusted pH | Type | Added amount (wt%/PVA) | |
| Ex. 1 | Syn. Ex. 1 | TC-310 | 2.0 | - | (3.4) | ADH | 5.0 | 3:40 |
| Ex. 2 | Syn. Ex. 1 | TC-335 | 2.0 | - | (4.5) | ADH | 5.0 | 6:10 |
| Ex. 3 | Syn. Ex. 1 | TC-310 | 2.0 | NH₃ | 4.0 | ADH | 5.0 | 5:30 |
| Ex. 4 | Syn. Ex. 1 | TC-335 | 2.0 | HCl | 4.0 | ADH | 5.0 | 5:30 |
| Ex. 5 | Syn. Ex. 1 | ZC-126 | 2.0 | HCl | 4.0 | ADH | 5.0 | 8:10 |
| Ex. 6 | Syn. Ex. 2 | TC-310 | 2.0 | - | (3.4) | ADH | 5.0 | 4:20 |
| Ex. 7 | Syn. Ex. 1 | ZA-20 | 2.0 | HCl | 4.0 | ADH | 5.0 | 7:30 |
| Ex. 8 | Syn. Ex. 1 | TC-310 | 2.0 | - | (3.4) | PAH | 5.0 | 2:50 |
| Ex. 9 | Syn. Ex. 1 | TC-310 | 4.0 | NH₃ | 4.0 | ADH | 5.0 | 4:10 |
| Ex. 10 | Syn. Ex. 1 | Al₂(SO₄)₃ | 3.0 | HCl | 4.0 | ADH | 5.0 | 5:30 |
| Ex. 11 | Syn. Ex. 1 | Al₂(SO₄)₃ | 5.0 | HCl | 4.0 | ADH | 5.0 | 5:20 |
| Ex. 12 | Syn. Ex. 1 | AlCl₃ | 3.0 | HCl | 4.0 | ADH | 5.0 | 7:20 |
| Comp. Ex. 1 | Syn. Ex. 1 | - | - | - | (6.2) | ADH | 5.0 | ≥3 hours |
| Comp. Ex. 2 | Syn. Ex. 1 | TC-310 | 2.0 | - | (3.4) | - | - | Not gelled |
| Comp. Ex. 3 | Syn. Ex. 1 | - | - | HCl | 4.0 | ADH | 5.0 | 15:50 |
| Comp. Ex. 4 | Syn. Ex. 1 | - | - | HCl | 4.5 | ADH | 5.0 | 18:20 |
| Comp. Ex. 5 | Comp. Syn. Ex. 1 | TC-310 | 2.0 | - | (3.4) | ADH | 5.0 | Not gelled |

| | | | | | | | | |
|---|---|---|---|---|---|---|---|---|
| Ex.: Example Comp. Ex.: Comparative Example | | | | | | | | |

The "wt%/PVA" means parts relative to 100 parts of the PVA resin. Also, the added amount of the water-soluble metal (C) means an added amount in terms of metal.

### Abbreviations in Table 2

### (C) Water-soluble metal

TC-310: ORGATIX TC-310, titanium lactate in 2-propanol/water, made by Matsumoto Fine Chemical Co., Ltd.
TC-335: ORGATIX TC-335, dihydroxybis(ammonium lactate)titanium in 2-propanol/water, made by Matsumoto Fine Chemical Co., Ltd.
ZC-126: ORGATIX ZC-126, aqueous solution of zirconyl chloride, made by Matsumoto Fine Chemical Co., Ltd.
ZA-20: Zircozol ZA-20, aqueous solution of zirconium acetate, made by Daiichi Kigenso Kagaku Kogyo Co., Ltd.
Al₂(SO₄)₃: aluminium sulfate [reagent]
AlCl₃: aluminium chloride [reagent]

### (B) Crosslinking agent

ADH: adipic acid dihydrazide
PAH: N-aminopolyacrylamide, made by Otsuka Chemical Co., Ltd.

### Example 13

To 10 parts of the PVA resin (A) obtained in Synthetic Example 1, 90 parts of pure water was added. The mixture was heated with stirring, and after 2 hours' dissolution at 90°C, cooled to 20°C. Thus a 10% aqueous solution was obtained. To 100 parts of this aqueous solution, 0.5 part of ORGATIX TC-310 made by Matsumoto Fine Chemical Co., Ltd. (titanium lactate in 2-propanol/water: 10%) was added as a water-soluble metal (C), 5 parts of a 10% aqueous solution of adipic acid dihydrazide was added as a crosslinking agent (B), and the whole was quickly mixed. In addition, 70 parts of amorphous silica (FINESIL X-45, mean particle size: 4.5 µm, made by Tokuyama Corp.), 5 parts of poly(diallyldimethylammonium chloride) (PAS-H-5L, 28% aqueous solution, made by Nittobo Co., Ltd.) as an ink fixing agent, and pure water were added, and the mixture was stirred using a homogenizer for 1 minute to prepare an ink receiving layer-forming coating liquid having a solid content of 20%.

The coating liquid was applied to a high-quality paper having a basis weight of 64 g/m² with the use of an air knife coater so that the solid content might be 15 g/m², and was dried at 120°C for 5 minutes to prepare an inkjet recording material. Coating was completed within 5 minutes from the addition of the crosslinking agent.

### Example 14

An inkj et recording material was prepared in the same manner as in Example 13 except that the PVA resin obtained in Synthetic Example 2 was used instead of the PVA resin obtained in Synthetic Example 1.

### Comparative Example 6

An inkj et recording material was prepared in the same manner as in Example 13 except that the ORGATIX TC-310 (titanium lactate) as a water-soluble metal (C) was not added.

### Comparative Example 7

An inkj et recording material was prepared in the same manner as in Example 13 except that the PVA resin obtained in Comparative Synthetic Example 1 not containing diacetone acrylamide unit was used instead of the PVA resin obtained in Synthetic Example 1.

The surface of the ink receiving layer of each of the inkjet recording materials prepared in Examples 13 and 14 and Comparative Examples 6 and 7 was observed under a 100× magnifying power microscope, and the degree of cracking was evaluated based on the criteria shown below. The surface strength of and the ink absorbency of the ink receiving layer were also evaluated based on the criteria shown below. The results are shown in Table 3.

### Surface Crack Observation

The surface of the ink receiving layer of each inkjet recording material prepared above was observed under a 100× magnifying power microscope, and the degree of cracking was evaluated based on the following criteria.
Good: No surface cracks are observed (No problem)
Poor: Several surface cracks are observed (Hard to use)
Unacceptable: Great many surface cracks are observed (Useless)

### Surface Strength

To the surface of the ink receiving layer of each inkjet recording material prepared above, a mending tape (18 mm in width) made by Sumitomo 3M was attached. After peeling off the tape, the conditions of the coating layer transferred on the tape were visually observed, and the surface strength was evaluated based on the following criteria.
Good: The coating layer was hardly transferred (No practical problem)
Poor: Part of the coating layer was transferred (Slightly problematic)
Unacceptable: Most of the coating layer was transferred (Practically problematic)

### Ink Absorbency

The prepared inkjet recording material was set into a printer made by Seiko Epson "PX-V630", and solid printing with black ink was performed. At regular time intervals after the printing, the printed part of the recording sheet was rubbed with a finger, and the time before the printed part became unchanged was determined. Shorter time means better ink absorption rate.

**Table 3**

| | Surface Crack Observation | Surface Strength | Ink Absorbency (s) |
|---|---|---|---|
| Example 13 | Good | Good | 15 |
| Example 14 | Good | Good | 20 |
| Comparative Example 6 | Poor | Poor | 40 |
| Comparative Example 7 | Unacceptable | Unacceptable | 45 |

As Table 2 clearly shows, in the reaction of (A) a PVA resin containing a diacetone acrylamide unit with (B) a crosslinking agent having a hydrazino group, coexistence of (C) a water-soluble metal increases the crosslinking reaction rate, reduces the time required for gelation, and thus increases the production rate of an aqueous gel.

Also, as Table 3 clearly shows, when (A) a PVA resin containing a diacetone acrylamide unit and (B) a crosslinking agent having a hydrazino group are used as a binder for an inkjet recording material, the crosslinking reaction rate is increased, the viscosity of an aqueous solution is increased in a short time, and the binder is less likely to be absorbed in porous inorganic particles, resulting in a higher binder strength, less occurrence of cracking, a higher surface strength, and also a higher ink absorbency.

### INDUSTRIAL APPLICABILITY

By utilizing the crosslinking rate acceleration method of the present invention for the preparation of an aqueous gel, an aqueous gel can be obtained in a shorter time, and therefore the production rate can be improved. Also, by utilizing the crosslinking rate acceleration method of the present invention for the preparation of an inkjet recording material, an inkjet recording material having less incidence of cracking, a higher surface strength, and an excellent ink absorbency can be obtained. In addition, in the production of a coating material for paper or films where crosslinking reaction of a PVA resin with a crosslinking agent is used for improved water resistance or strength, the coexistence of a water-soluble metal improves the crosslinking reaction rate, therefore desirable properties can be achieved in a short time, and thus the production rate can be improved.

## Claims

1. A method for accelerating the rate of crosslinking reaction **characterized in that**, in a crosslinking reaction of (A) a polyvinyl alcohol resin containing a diacetone acrylamide unit and (B) a crosslinking agent having a hydrazino group performed in water, (C) a water-soluble metal not containing any alkaline or alkaline-earth metal coexists; wherein the ratio of the (C) water-soluble metal is 0.05 to 20 parts by mass in terms of the metal atom relative to 100 parts by mass of the (A) polyvinyl alcohol resin and wherein the pH in the reaction system is less than 6.

2. A method for producing an aqueous gel **characterized in that** (A) a polyvinyl alcohol resin containing a diacetone acrylamide unit and (B) a crosslinking agent having a hydrazino group are reacted in water in the presence of (C) a water-soluble metal not containing any alkaline or alkaline-earth metal; wherein the ratio of the (C) water-soluble metal is 0.05 to 20 parts by mass in terms of the metal atom relative to 100 parts by mass of the (A) polyvinyl alcohol resin and wherein the pH in the reaction system is less than 6.

3. The method according to claim 1 or 2, wherein the (C) water-soluble metal is one or more kinds selected from aluminium compounds, titanium compounds, and zirconium compounds.

4. The method according to any one of claims 1 to 3, wherein the (C) water-soluble metal is one or more kinds selected from titanium lactate, zirconium acetate, and zirconium chloride.

5. The method according to any one of claims 1 to 4, wherein the ratio of the (C) water-soluble metal is 1 to 100 parts by mass in terms of the metal atom relative to 100 parts by mass of the (B) crosslinking agent having a hydrazino group.

6. The method according to any one of claims 1 to 5, wherein the pH in the reaction system is adjusted to less than 6 by coexistence of (D) a pH adjuster.

7. The method according to any one of claims 1 to 6, wherein the pH in the reaction system is 3 to 4.5.

## Patentansprüche

1. Verfahren zum Beschleunigen der Geschwindigkeit einer Vernetzungsreaktion, **dadurch gekennzeichnet, dass** in einer Vernetzungsreaktion von (A) einem Polyvinylalkoholharz, enthaltend eine Diacetonacrylamideinheit, und (B) einem Vernetzer mit einer Hydrazinogruppe, die in Wasser durchgeführt wird, (C) ein wasserlösliches Metall, das kein Alkali- oder Erdalkalimetall enthält, co-existiert; wobei das Verhältnis von (C) dem wasserlöslichen Metall 0,05 bis 20 Masseteile hinsichtlich des Metallatoms bezogen auf 100 Masseteile von (A) dem Polyvinylalkoholharz beträgt und wobei der pH in dem Reaktionssystem weniger als 6 beträgt.

2. Verfahren zur Herstellung eines wässrigen Gels, **dadurch gekennzeichnet, dass** (A) ein Polyvinylalkoholharz, das eine Diacetonacrylamideinheit enthält, und (B) ein Vernetzer mit einer Hydrazinogruppe in Wasser in der Gegenwart von (C) einem wasserlöslichen Metall, das kein Alkali- oder Erdalkalimetall enthält, umgesetzt werden; wobei das Verhältnis von (C) dem wasserlöslichen Metall 0,05 bis 20 Masseteile hinsichtlich des Metallatoms bezogen auf 100 Masseteile von (A) dem Polyvinylalkoholharz beträgt und wobei der pH in dem Reaktionssystem weniger als 6 beträgt.

3. Verfahren nach Anspruch 1 oder 2, wobei (C) das wasserlösliche Metall eine oder mehrere Arten, ausgewählt aus Aluminiumverbindungen, Titanverbindungen und Zirkoniumverbindungen, ist.

4. Verfahren nach einem der Ansprüche 1 bis 3, wobei (C) das wasserlösliche Metall eine oder mehrere Arten, ausgewählt aus Titanlactat, Zirconiumacetat und Zirconiumchlorid, ist.

5. Verfahren nach einem der Ansprüche 1 bis 4, wobei das Verhältnis von (C) dem wasserlöslichen Metall 1 bis 100 Masseteile hinsichtlich des Metallatoms bezogen auf 100 Masseteile von (B) dem Vernetzer mit einer Hydrazinogruppe beträgt.

6. Verfahren nach einem der Ansprüche 1 bis 5, wobei der pH in dem Reaktionssystem durch die Co-Existenz von (D) einem pH-Einsteller auf weniger als 6 eingestellt wird.

7. Verfahren nach einem der Ansprüche 1 bis 6, wobei der pH in dem Reaktionssystem 3 bis 4,5 beträgt.

## Revendications

1. Procédé pour accélérer la vitesse de réaction de réticulation **caractérisée en ce que**, dans une réaction de réticulation de (A) une résine d'alcool polyvinylique contenant une unité de diacétone acrylamide et (B) un agent de réticulation ayant un groupe hydrazino réalisé dans l'eau, (C) un métal soluble dans l'eau ne contenant pas de métal alcalin ou alcalino-terreux coexiste ; dans lequel le rapport du métal soluble dans l'eau (C) est compris entre 0.05 et 20 parties en masse en termes d'atome de métal par rapport à 100 parties en masse de la résine d'alcool polyvinylique (A) et dans lequel le pH dans le système réactionnel est inférieur à 6.

2. Procédé de production d'un gel aqueux **caractérisé en ce que** (A) une résine d'alcool polyvinylique contenant une unité de diacétone acrylamide et (B) un agent de réticulation ayant un groupe hydrazino réagissent dans l'eau en présence de (C) un métal soluble dans l'eau ne contenant pas de métal alcalin ou alcalino-terreux ; dans lequel le rapport du métal soluble dans l'eau (C) est compris entre 0.05 et 20 parties en masse en termes d'atome de métal par rapport à 100 parties en masse de la résine d'alcool polyvinylique (A) et dans lequel le pH dans le système réactionnel est inférieur à 6.

3. Procédé selon la revendication 1 ou 2, dans lequel le métal soluble dans l'eau (C) est un ou plusieurs types choisis parmi les composés d'aluminium, les composés de titane et les composés de zirconium.

4. Procédé selon l'une quelconque des revendications 1 à 3, dans lequel le métal soluble dans l'eau (C) est un ou plusieurs types choisis parmi le lactate de titane, l'acétate de zirconium et le chlorure de zirconium.

5. Procédé selon l'une quelconque des revendications 1 à 4, dans lequel le rapport du métal soluble dans l'eau (C) est compris entre 1 et 100 parties en masse en termes d'atome de métal par rapport à 100 parties en masse de l'agent de réticulation (B) ayant un groupe hydrazino.

6. Procédé selon l'une quelconque des revendications 1 à 5, dans lequel le pH du système réactionnel est ajusté à moins de 6 par la coexistence de (D) un régulateur de pH.

7. Procédé selon l'une quelconque des revendications 1 à 6, dans lequel le pH du système réactionnel est compris entre 3 et 4,5.
